# EUROPÄISCHE PATENTSCHRIFT

(11) **EP 3 737 558 B1**
(45) Veröffentlichungstag und Bekanntmachung des Hinweises auf die Patenterteilung: **27.10.2021**
(21) Anmeldenummer: 18803999.4
(22) Anmeldetag: 21.11.2018
(51) Int. Cl.: B32B 17/10

(54) **FAHRZEUGSCHEIBE, FAHRZEUG UND VERFAHREN ZUR HERSTELLUNG**
VEHICLE WINDOW, VEHICLE AND METHOD OF MANUFACTURING
VITRE DE VÉHICULE, VÉHICULE ET PROCÉDÉ DE FABRICATION

(30) Priorität: 11.01.2018 EP 18151114
(43) Veröffentlichungstag der Anmeldung: 18.11.2020
(73) Patentinhaber: SAINT-GOBAIN GLASS FRANCE, 92400 Courbevoie (FR)
(72) Erfinder: WOHLFEIL, Dirk, 4730 Raeren (BE)
(74) Vertreter: Gebauer, Dieter Edmund
(86) Internationale Anmeldenummer: PCT/EP2018/082005
(87) Internationale Veröffentlichungsnummer: WO 2019/137674

(56) Entgegenhaltungen:
- WO-A1-2017/068368
- DE-T2- 69 906 366
- US-A- 5 443 669
- US-A1- 2009 130 395
- US-A1- 2016 243 796

## Beschreibung

Die Erfindung betrifft eine Fahrzeugscheibe, ein Fahrzeug mit einer Fahrzeugscheibe sowie ein Verfahren zur Herstellung einer Fahrzeugscheibe.

Aus dem Stand der Technik sind Fahrzeugscheiben mit Sensoren, beispielsweise aus der Druckschrift EP 2 121 308 B1, bekannt. Diese Sensoren können auch, wie in EP 2 121 308 B1 beschrieben, in die Fahrzeugscheibe integriert sein (zwischen einzelnen Schichten der Fahrzeugscheibe).

Im Allgemeinen werden die bekannten Lösungen für Fahrzeugscheiben, die unter anderem mit Sensoren ausgestaltet sein können, hinsichtlich ihrer optischen Eigenschaften als vergleichsweise störanfällig empfunden.

Bei der Herstellung einer Fahrzeugscheibe wird unter thermischem Einfluss ein Biege-Prozess durchgeführt. Dabei kann die Fahrzeugscheibe entlang transparenter Bereiche und bedruckter bzw. schwarzbedruckter Bereich unterschiedliche Temperaturen aufweisen, sodass das Biegeverhalten entlang der Fahrzeugscheibe variieren kann. Im Ergebnis können beispielsweise transparente Bereiche und schwarzbedruckte Bereiche der Fahrzeugscheibe unterschiedliche Biegeradien aufweisen.

Die Folge solcher Abweichungen bzw. Variationen der Biegeradien sind erhebliche Verzerrungen entlang der Fahrzeugscheibe. Es liegen sogenannte "Brennlinien" entlang den Grenzen zwischen transparenten und schwarzbedruckten Bereichen der Fahrzeugscheibe vor.

Die Brennlinien führen zu einer Beugung des Lichts, sodass eine optische Verzerrung stattfindet. Das Auftreten von Brennlinien als optische Eigenschaft bzw. optischer Effekt kann demnach erheblichen Einfluss auf z.B. die Genauigkeit der optischen Sensoren ausüben. Des Weiteren sind solche Verzerrungen in Randbereichen der Fahrzeugscheibe auch durch einen Fahrzeugführer wahrnehmbar und stören zumindest den Gesamteindruck.

Dabei sind Schwarzdruck-Bereiche unter anderem aus ästhetischen Gründen entlang von Sensoranordnungen an Fahrzeugscheiben vorgesehen, um beispielsweise Klebestellen zur Befestigung der Sensoreinheiten zu verbergen.

Der Erfindung liegt somit die Aufgabe zugrunde, eine Fahrzeugscheibe bereitzustellen, die ein ästhetisches. verzerrungsfreies Erscheinungsbild vermittelt, kostengünstig herstellbar ist und verbesserte optische Eigenschaften bereitstellt.

Die Aufgabe der vorliegenden Erfindung wird erfindungsgemäß durch eine Fahrzeugscheibe gemäß dem unabhängigen Anspruch 1 gelöst. Ein Herstellungsverfahren ist durch einen weiteren unabhängigen Anspruch angegeben. Vorteilhafte Ausführungsformen und Weiterbildungen ergeben sich aus den Unteransprüchen sowie aus der Beschreibung unter Bezugnahme auf die Figuren.

Die erfindungsgemäße Fahrzeugscheibe, insbesondere für ein Kraftfahrzeug, einen Bus, ein Zug oder ein Schiff, ist mit wenigstens einem ersten Scheibenelement und einem zweiten Scheibenelement, die flächig miteinander verbunden sind, vorgesehen, sodass die Fahrzeugscheibe eine erste Scheibenfläche, eine zweite Scheibenfläche, eine dritte Scheibenfläche und eine vierte Scheibenfläche aufweist. Die zweite Scheibenfläche weist einen ersten Druckbereich und die dritte oder vierte Scheibenfläche einen zweiten Druckbereich auf, zur Ausgestaltung eines Sichtbereiches entlang einer Fahrzeugscheibe. Der erste und zweite Druckbereich sind jeweils mit wenigstens einer ersten, zweiten und dritten Zone ausgestaltet, wobei wenigstens eine der ersten und/oder zweiten Zonen wenigstens teilweise bedruckt ist und die dritten Zonen jeweils nicht bedruckt sind, und wobei die zweiten Zonen jeweils als ein Übergangsbereich zwischen der ersten Zone und der dritten Zone ausgebildet sind, sodass wenigstens ein optischer Effekt des ersten Druckbereiches durch einen optischen Effekt des zweiten Druckbereiches kompensierbar ist, bevorzugt kompensiert ist

Der Erfindung liegt die Idee zugrunde, dass erste und zweite Scheibenelemente einer Fahrzeugscheibe jeweils mit Druckbereichen ausgestaltet sind, sodass sich auftretende optische Effekte bzw. optische Eigenschaften gegenseitig aufheben bzw. kompensieren.

Indem der erste Druckbereich und der zweite Druckbereich mit verschiedenen adaptierten bzw. aufeinander abgestimmten Zonen ausgestaltet sind, kann eine Kompensation optischer Effekte bzw. Eigenschaften erfolgen, sodass beispielsweise eine Brennlinie bzw. eine optische Beugung innerhalb der Fahrzeugscheibe kompensierbar ist. Insbesondere sollen zueinander korrespondierende optische Effekte bereitgestellt werden, sodass sich die zueinander korrespondierenden Effekte in Summe vorzugsweise gegenseitig aufheben.

Indem optische Effekte bzw. Eigenschaften entlang der Fahrzeugscheibe, insbesondere in einem Sichtbereich eines Fahrzeugführers und/oder eines optischen Sensors bzw. einer Sensoranordnung, aufgehoben bzw. vermieden werden können, sind mindestens ein verzerrungsfreies Erscheinungsbild, angenehme Sichtbedingungen für einen Fahrzeugführer und/oder eine verbesserte Genauigkeit bzw. Reproduzierbarkeit der Ergebnisse von Sensoren bzw. Sensoranordnungen erzielbar.

So ist insbesondere vorgesehen, dass anhand der vorliegenden Erfindung eine Fahrzeugscheibe mit vorteilhaften optischen Eigenschaften für die Verwendung mit einem optischen Sensor bereitgestellt werden kann.

Des Weiteren kann vorgesehen sein, dass anhand der vorliegenden Erfindung eine Fahrzeugscheibe mit vorteilhaften optischen Eigenschaften für einen Fahrzeugführer bereitgestellt werden kann.

Die erfindungsgemäße Fahrzeugscheibe weist wenigstens ein erstes Scheibenelement und ein zweites Scheibenelement auf, die flächig miteinander verbunden sind, sodass die Fahrzeugscheibe mit einer ersten Scheibenfläche, einer zweiten Scheibenfläche, einer dritten Scheibenfläche und einer vierten Scheibenfläche ausgestaltet ist.

Vorzugsweise sind das erste und zweite Scheibenelement per Lamination aufeinander angeordnet und miteinander verbunden. So kann zwischen dem ersten und zweiten Scheibenelement eine Laminierschicht vorgesehen sein. Dies entspricht einem üblicherweise angewandten Vorgehen zur Bereitstellung miteinander verbundener Scheibenelemente für eine Fahrzeugscheibe.

Anhand der laminierten Scheibenelemente ist eine Grundstruktur für ein optisches System einer Fahrzeugscheibe bereitgestellt.

Anhand der verbundenen Scheibenelemente sind insgesamt vier Scheibenflächen verfügbar. Die erste Scheibenfläche stellt die Außenseite der Fahrzeugscheibe dar. Die vierte Scheibenfläche stellt die Innenseite der Fahrzeugscheibe dar.

Die zweite und dritte Scheibenfläche sind einander entgegengerichtet, wobei eine Laminierschicht dazwischenliegend vorgesehen sein kann.

Die zweite Scheibenfläche weist einen ersten Druckbereich und die dritte oder vierte Scheibenfläche einen zweiten Druckbereich auf, zur Ausgestaltung eines Sichtbereiches entlang einer Fahrzeugscheibe, z.B. für wenigstens einen optischen Sensor.

Mittels der vorliegenden Erfindung ist vorgesehen, eine Fahrzeugscheibe bzw. einen Sichtbereich entlang einer Fahrzeugscheibe mit vorteilhaften, optischen Eigenschaften auszugestalten. Dies betrifft sowohl einen Fahrzeugführer eines Kraftfahrzeuges, eines Schiffes oder dergleichen, als auch die Anwendung von Sensoren bzw. optischen Sensoren. Exemplarisch soll die vorliegende Erfindung nachfolgend insbesondere mit Blick auf den Einsatz optischer Sensoren erläutert werden, wobei selbige Ausführungen für einen Fahrzeugführer heranzuziehen sind.

Unter einem Druckbereich kann im Sinne der vorliegenden Erfindung insbesondere ein Bereich einer Scheibenfläche bzw. eines Scheibenelements verstanden werden, der beispielsweise mittels Schwarzdruck bzw. Siebdruck zweckmäßig beschichtet werden kann, insbesondere teilweise beschichtet werden kann.

So kann ein Druckbereich sowohl kontinuierlich bedruckte Bereiche bzw. Zonen, teilweise bedruckte Bereiche und nicht bedruckte Bereiche aufweisen.

Der zweite Druckbereich kann entlang der dritten oder vierten Schiebenfläche angeordnet sein. Bevorzugt, und nachfolgend exemplarisch dargelegt, ist der zweite Druckbereich auf der vierten Scheibenfläche angeordnet.

In diesem Sinne kann auch ein dritter Druckbereich z.B. auf der dritten Scheibenfläche vorgesehen sein.

Der Sichtbereich kann im Sinne der vorliegenden Erfindung als derjenige Bereich einer Fahrzeugscheibe aufgefasst werden, der die optischen Eigenschaften bzw. Gegebenheiten bzw. Bedingungen einer Sensormessung oder des Blickfelds eines Fahrzeugführers beeinflusst.

Je nach Anwendung bzw. Einzelfall können sowohl zentrale Bereiche als auch periphere Bereiche einer Fahrzeugscheibe dem Sichtbereich zugeordnet werden. Während einem Sensor vornehmlich ein Sichtbereich in zentraleren Abschnitten einer Fahrzeugscheibe zuzuweisen ist, kann der Sichtbereich eines Fahrzeugführers die gesamte Fläche einer Fahrzeugscheibe inklusive der Ränder einbeziehen.

So kann der Sichtbereich als derjenige Bereich definiert werden, in dem der Sensor bzw. die Sensoranordnung optische Effekte bzw. optische Eigenschaften einer Fahrzeugscheibe "sehen" kann, also eine Beeinflussung der Messergebnisse des jeweiligen Sensors besteht.

Demnach bezieht sich der Sichtbereich beispielsweise nicht lediglich auf einen z.B. transparenten Bereich einer Fahrzeugscheibe, durch den eine elektromagnetische Strahlung im Zuge einer optischen Messung hindurchtreten kann. Vielmehr beschreibt der Sichtbereich im Sinne der vorliegenden Erfindung auch umliegende bzw. periphere Bereiche, die insbesondere die Brechkraft des ersten und/oder zweiten Scheibenelements entlang der optischen Achse des wenigstens einen Sensors beeinflussen können.

Gemäß der vorliegenden Erfindung sind der erste und zweite Druckbereich jeweils mit einer ersten, zweiten und dritten Zone ausgestaltet, wobei wenigstens eine der ersten und/oder zweiten Zonen (14.1; 14.2; 15.1; 15.2) wenigstens teilweise bedruckt ist und die dritten Zonen jeweils nicht bedruckt sind, und wobei die zweiten Zonen jeweils als ein Übergangsbereich zwischen der ersten Zone und der dritten Zonen ausgebildet sind, sodass wenigstens ein optischer Effekt des ersten Druckbereiches durch einen optischen Effekt des zweiten Druckbereiches kompensierbar ist.

Der erste und zweite Druckbereich sind hinsichtlich ihrer Ausgestaltung in jeweils drei Zonen unterteilbar. Diese Zonen können im Rahmen der vorliegenden Erfindung als vorzugsweise voneinander unterscheidbare Flächenbereiche bzw. -abschnitte in einem Sichtbereich des optischen Sensors aufgefasst werden.

Die erste Zone stellt eine Zone dar, die ein globales, optisches Verhalten der Fahrzeugscheibe mitbestimmt. Bevorzugt weist die erste Zone eine Bedruckung, insbesondere eine Schwarzbedruckung, auf. Alternativ kann die erste Zone zumindest teilweise unbedruckt sein.

Die zweite Zone stellt einen Übergangsbereich zwischen der ersten Zone und der dritten Zone dar. So kann die zweite Zone als ein bedruckter Bereich, insbesondere als ein teilbedruckter Bereich, aufgefasst werden, um einen Übergang zwischen der ersten und dritten Zone bereitzustellen.

Alternativ kann die zweite Zone in eine erste Zone integriert vorgesehen sein.

In diesem Sinne kann die zweite Zone einen fortschreitenden, graduell verlaufenden bzw. weichen Übergang oder einen abrupten, unmittelbaren, harten bzw. infinitesimal kurzen Übergang zwischen der ersten und dritten Zone darstellen.

Die dritte Zone ist stets als eine transparente Zone der ersten und zweiten Druckfläche ausgestaltet. Indem die dritte Zone transparent bzw. unbedruckt ist, stellt sie einen Bereich der ersten und zweiten Druckfläche dar, durch den beispielsweise ein optischer Sensor oder ein Fahrzeugführer zweckmäßig hindurchblicken kann. Insofern kann die dritte Zone als derjenige Bereich aufgefasst werden, der von der ersten und/oder zweiten Zone eingerahmt ist.

Die Kompensation optischer Effekte bzw. Eigenschaften anhand des ersten und zweiten Druckbereiches bedeutet insbesondere, dass beispielsweise eine Beugung durch den ersten Druckbereich mittels einer dazu invertierten bzw. korrespondierenden Beugung des zweiten Druckbereiches aufhebbar ist.

Insbesondere ist im Sinne der vorliegenden Erfindung unter der Kompensation eines optischen Effektes die Kompensation einer optischen Verzerrung zu verstehen, sodass eine vollständig bzw. nahezu vollständig verzerrungsfreie Fahrzeugscheibe vorliegt.

Vorzugsweise ist durch den zweiten Druckbereich ein invertierter optischer Effekt erzielbar, der einem optischen Effekt des ersten Druckbereiches in diesem Sinne betragsmäßig entspricht.

So kann beispielsweise das erste Scheibenelemente mit dem ersten Druckbereich eine Sammel- bzw. Konkavlinse ausbilden, wobei das zweite Scheibenelement mit dem zweiten Druckbereich eine Zerstreuungs- bzw. Konvexlinse ausbildet, sodass in Kombination des ersten und zweiten Scheibenelements ein neutrales optisches System vorliegt.

Im Sinne der vorliegenden Erfindung kann unter der Kompensation wenigstens eines optischen Effektes die gezielte Aufhebung optischer Effekte anhand einander gegenüberstehenden, optisch invertierender Komponenten verstanden werden.

Der vollständig zusammengesetzte Strahlengang durch die Fahrzeugscheibe übt vorzugsweise keinen bzw. nahezu keinen Einfluss auf die durchlaufende optische Strahlung auf. In diesem Sinne kann der mittels der erfindungsgemäßen Fahrzeugscheibe bereitgestellte Strahlengang als ein neutraler Strahlengang aufgefasst werden.

Es ist möglich eine optische Strahlung unbeeinträchtigt bzw. nahezu unbeeinträchtigt durch die Fahrzeugscheibe hindurch zu transferieren.

In diesem Kontext kann unter einer Kompensation durch einen Siebdruck bzw. Schwarzdruck auch eine Über- bzw. Unterkompensation von optischen Effekte verstanden werden, sodass das gesamte optische System beispielsweise keine bzw. nahezu keine Brechkraft aufweist.

Eine solche Überkompensation kann nicht nur ermöglichen die optischen Effekte bzw. Verzerrungen, die insbesondere durch einen Siebdruck bzw. einen Schwarzdruck begründet werden, aufzuheben, sondern vielmehr auch zusätzliche optische Effekte der Fahrzeugscheibe, als optisches Gesamtsystem, zu kompensieren.

Alternativ kann ein Siebdruck bzw. ein Schwarzdruck in Form einer Unterkompensation zur Aufhebung lediglich eines Teils der optischen Effekte vorgesehen sein, sodass die Summe an optischen Effekten des Gesamtsystems wiederrum keine bzw. nahezu keine optischen Verzerrungen aufweist.

So können mittels einer bedarfsweisen Überkompensation anhand der vorliegenden Erfindung vorzugsweise sämtliche bzw. nahezu sämtliche optischen Effekte innerhalb eines optischen Gesamtsystems eines Fahrzeugführers, eines Sensors bzw. optischen Sensors oder dergleichen aufgehoben werden.

Im Allgemeinen ist anhand der vorliegenden Erfindung eine optische Beeinträchtigung bzw. Verzerrung von Messergebnissen aufgrund von beispielsweise Brennlinien bzw. Beugungseffekten vermeidbar.

Darüber hinaus können weitere Faktoren die optischen Eigenschaften bzw. Bedingungen einer Fahrzeugscheibe beeinträchtigen. Insbesondere können die Dicke der einzelnen Scheibenelemente bzw. der Fahrzeugscheibe im Gesamten, die Farbe der Scheibenelemente, die Laminierschicht zwischen den wenigstens zwei Scheibenelementen oder Beschichtungen auf bzw. zwischen den Scheibenelementen einen Einfluss auf die optischen Bedingungen im Sinne der vorliegenden Erfindung ausüben.

So kann im Sinne vorliegenden Erfindung vorgesehen sein, den ersten und/oder zweiten Druckbereich derart auszugestalten, dass das optische Gesamtsystem der Fahrzeugscheibe keinen bzw. nahezu keinen optischen Effekt, insbesondere keine optische Brechkraft, aufweist, und somit ein neutrales optisches System bereitstellbar ist.

Beispielsweise können die Scheibenelemente verschiedene oder identische Dicken aufweisen. Insbesondere sind Scheibendicken vorgesehen, die den im Kraftfahrzeugbereich üblicherweise verwendeten Dimensionen entsprechen. Des Weiteren ist der Einsatz von Dünnglas für ein Scheibenelement oder für beide Scheibenelemente, z.B. mit Dicken von kleiner oder gleich 1,2 mm, bevorzugt von kleiner oder gleich 1,0 mm und besonders bevorzugt von 0,6 mm bis 1,0 mm, vorstellbar.

Hinsichtlich der Farbe einzelner Scheibenelemente kann vorgesehen sein, dass wenigstens eines der Scheibenelemente eine Färbung in grün, blau, weiß oder eine andere, im Bereich der Kraftfahrzeuge übliche Farbgebung aufweist.

Darüber hinaus sind Beschichtungen entlang der Scheibenflächen, insbesondere entlang der zweiten, dritten oder vierten Schiebenfläche vorstellbar, wie z.B. eine Infrarot-reflektierende Beschichtung oder eine Beschichtung zur Reduktion der Wärmeabstrahlung ("Low-emissivity"-Beschichtung).

Dabei kann beispielsweise eine Infrarot-reflektierende Beschichtung auch innerhalb einer Laminierschicht zwischen den zwei Scheibenelementen vorgesehen sein. So ist die Ausbildung einer Laminierschicht in Form von zwei Polyvinylbutyral-Schichten (PVB-Schichten) bzw. -Folien vorstellbar. Zwischen den beiden PVB-Schichten kann eine Infrarot-reflektierende bzw. Infrarot-absorbierende Zwischenschicht vorgesehen sein, sodass eine Sandwich-Bauweise vorliegt.

Darüber hinaus können die Druckbereiche in ihrer konkreten Ausgestaltung hinsichtlich Formgebung und Bedruckungsform an weitere Faktoren adaptierbar sein, wie z.B. die Abdeckung von Klebestellen eines Sensors bzw. einer Sensoreinheit, die Bereitstellung einer bedruckten Fläche als eine Klebefläche für weitere Komponenten oder dergleichen.

Zusammenfassend ist im Zuge der vorliegenden Erfindung eine gezielte Adaption der ersten und zweiten Druckfläche an die Bedingungen einer Fahrzeugscheibe vorgesehen, um optische Effekte bzw. Eigenschaften kompensieren und insbesondere eine verzerrungsfreie Fahrzeugscheibe bereitstellen zu können.

Nach einer Ausführungsform ist vorgesehen, dass eine Brechkraft als optische Eigenschaft des ersten Scheibenelements im ersten Druckbereich durch eine Brechkraft als optische Eigenschaft des zweiten Scheibenelements (12) im zweiten Druckbereich kompensierbar ist.

Insbesondere ist das Auftreten einer Brennlinie an einem Übergang zwischen einer wenigstens teilweise schwarz bedruckten Zone und einer transparenten Zone eines Druckbereiches reduzierbar bzw. vermeidbar. In diesem Sinne kann einer optischen Beugung entgegengewirkt werden, indem der zweite Druckbereich eine invertierte Brechkraft aufweist, die der Brechkraft des ersten Druckbereiches betragsmäßig entspricht.

Gemäß einer weiteren Ausführungsform ist die erste Zone des ersten Druckbereiches kontinuierlich oder mit einem Muster aus Einzelelementen bedruckt.

Unter einem kontinuierlichen Druck ist insbesondere eine vollständige Beschichtung der Fläche im Zuge eines Druckverfahrens, wie z.B. eines Siebdruckverfahrens, zu verstehen. In diesem Fall ist die erste Zone im Falle eines Schwarzdrucks vollständig schwarz eingefärbt bzw. beschichtet. So wird eine maximale Absorption von einfallender, elektromagnetischer Strahlung sowie die Intransparenz der ersten Zone erreicht.

Ein Muster wird durch eine wiederkehrende, relative Anordnung von Einzelelementen zueinander erzeugt.

In einer Ausführungsform ist die zweite Zone des ersten Druckbereiches wenigstens teilweise als ein Muster aus gedruckten Einzelelementen ausgestaltet.

Die zweite Zone kann in diesem Sinne Bereiche aufweisen, die vollständig bedruckt oder nicht bedruckt sind. Des Weiteren weist die zweite Zone des ersten Druckbereiches wenigstens eine Teilfläche auf, die mit einem Muster aus Einzelelementen bestückt ist.

Die Ausgestaltung der zweiten Zone des ersten Druckbereiches kann derart vorgesehen sein, dass die zweite Zone durch die erste Zone und/oder die dritte Zone ergänzt wird. So kann die zweite Zone die dritte Zone lediglich teilweise umgeben, um in diesem Bereich einen Übergang zwischen der ersten und dritten Zone bereitzustellen.

Die konkrete Ausgestaltung der ersten, zweiten und dritten Zonen des ersten und zweiten Druckbereiches orientiert sich stets an dem zu erzielenden optischen Endergebnis, dass sich aus einer Kombination des ersten und zweiten Scheibenelements ergibt.

Die Ausbildung der ersten, zweiten und dritten Zonen des ersten und zweiten Druckbereiches ist in diesem Sinne bedarfsweise variierbar und aufeinander abstimmbar.

In einer weiteren Ausführungsform ist die erste Zone des zweiten Druckbereiches kontinuierlich, mit einem Muster aus Einzelelementen oder nicht bedruckt.

Somit kann die erste Zone des zweiten Druckbereiches, ebenso wie die erste Zone des ersten Druckbereiches, vollständig intransparent oder musterförmig bedruckt ausgestaltet sein.

Nach einer Ausführungsform ist die zweite Zone des zweiten Druckbereiches wenigstens teilweise als ein Muster aus Einzelelementen ausgestaltet. In diesem Sinne ist die zweite Zone entlang dem zweiten Druckbereich bzw. dem zweiten Scheibenelement als ein Übergangsbereich zwischen der zugehörigen ersten und dritten Zone aufzufassen.

Die zweite Zone des zweiten Druckbereiches kann derart mit einem Muster aus Einzelelementen bedruckt sein, sodass beispielsweise eine optische Beugung in Verbindung mit dem ersten Druckbereich des ersten Scheibenelements aufhebbar ist.

Auf diese Weise ist ein optischer Effekt des ersten Scheibenelements durch einen korrespondierenden optischen Effekt des zweiten Scheibenelements kompensierbar.

Gemäß einer weiteren Ausführungsform ist die erste Zone und/oder die zweite Zone des ersten Druckbereiches und/oder des zweiten Druckbereiches wenigstens teilweise identisch mit der jeweils zugehörigen, dritten Zone ausgestaltet.

Es ist eine beliebige, zweckmäßige Variation von gedruckten und nicht bedruckten Bereichen bzw. Zonen anwendbar. Insbesondere können einzelne Zonen auch ineinander übergehen und sind nicht strikt geometrisch voneinander abgrenzbar. In diesem Sinne können insbesondere erste und zweite Zonen als zumindest teilweise ineinander integriert oder identisch aufgefasst werden.

So kann beispielsweise die dritte Zone des zweiten Druckbereiches identisch mit der zugehörigen dritten Zone als nicht bedruckt und somit transparent ausgestaltet sein.

Des Weiteren kann beispielsweise die zweite Zone des ersten Druckbereiches teilweise nicht bedruckt sein, wie die zugehörige erste Zone.

Nach einer weiteren Ausführungsform kann das Muster aus Einzelelementen der ersten Zone und/oder der zweiten Zone des zweiten Druckbereiches ein Gradientenmuster sein.

Unter einem Gradientenmuster kann insbesondere verstanden werden, dass sich die Ausprägungsmerkmale des gedruckten Musters über die bedruckte Fläche hinweg ändern. So kann die Größe der Einzelelemente, die Abstände der Einzelelemente, die Form der Einzelelemente, eine Farbgebung der gedruckten Einzelelemente oder ein vergleichbares Ausprägungsmerkmal entlang der relevanten Druckfläche variierbar sein.

In diesem Sinne kann sich das Muster aus Einzelelementen entlang der Fläche der ersten und/oder zweiten Zone des zweiten Druckbereiches verändern bzw. variieren.

Des Weiteren kann ein solches Gradientenmuster allgemein für eine beliebige Zone des ersten und/oder zweiten Druckbereiches vorgesehen sein.

In einer Ausführungsform ist vorgesehen, dass die ersten und zweiten Zonen des ersten und zweiten Druckbereiches wenigstens teilweise in Form eines Schwarzdrucks ausgebildet sind.

In diesem Sinne ist es möglich, die ersten und zweiten Zonen jeweils derart individuell und angepasst mit einem Schwarzdruck auszugestalten, dass insbesondere Effekte wie eine Brechkraft in dem optischen System der Fahrzeugscheibe kompensierbar sind. Die Fahrzeugscheibe weist vorzugsweise keinen bzw. nahezu keinen optischen Effekt z.B. in Form einer Brechkraft auf.

Des Weiteren kann der Schwarzdruck als eine Blende zur zweckmäßig verzerrungsfreien Ausgestaltung der Fahrzeugscheibe vorgesehen sein.

Nach einer Ausführungsform ist der erste Druckbereich und der zweite Druckbereich jeweils als ein Siebdruck ausgestaltbar.

Mittels dem Siebdruckverfahren ist somit eine kostengünstige Vervielfältigung des ersten und zweiten Druckbereiches für die Massenfertigung von erfindungsgemäßen Fahrzeugscheiben möglich.

Des Weiteren kann im Zuge eines Siebdruckverfahrens vorgesehen sein, dass neben bzw. anstatt eines Schwarzdrucks entlang einer der Scheibenflächen der Fahrzeugscheibe anderweitig funktionale Schichten aufgetragen werden. So kann wenigstens eine der Scheibenflächen mit Elementen zur Realisierung z.B. einer Heizungs- oder Antennenfunktion oder einer anderweitigen Funktionalisierung beschichtet werden.

Beispielsweise ist eine Infrarot-reflektierende Beschichtung oder eine elektrisch leitende Beschichtung zur Umsetzung einer Scheiben-, Kamera- oder Sensorheizung denkbar. Auch ist die Ausgestaltung einer Beschichtung zur Verringerung der Wärmeabstrahlung, eine sogenannte "Low-emissivity"-Beschichtung, möglich, sowie eine jede andere, beliebig funktionalisierende Beschichtung vorstellbar ist. Insbesondere können derartige, funktionalisierende Beschichtungen auf der dritten oder vierten Scheibenfläche, bevorzugt auf der dritten Scheibenfläche, angeordnet sein. Eine "Low-emissivity"-Beschichtung ist bevorzugt auf der vierten Scheibenfläche angeordnet.

In einer Ausführungsform weisen die Einzelelemente, für ein gedrucktes Muster aus Einzelelementen, die geometrische Form eines Kreises, eines Rechtecks, eines Quadrats, einer Raute, eines Hexagons, eines Oktaeders oder dergleichen auf.

Die Ausgestaltung mit einem Muster aus Einzelelementen beschreibt insbesondere die Bedruckung mit einer Vielzahl von vorzugsweise beliebig bzw. bedarfsweise ausgestaltbaren Elementen.

In einem nebengeordneten Aspekt der Erfindung ist ein Fahrzeug vorgesehen, insbesondere ein Kraftfahrzeug, vorzugsweise ein Personen- oder Lastkraftwagen, ein Bus, ein Zug oder ein Schiff, mit einer Fahrzeugscheibe nach einem der vorherigen Ansprüche.

Demzufolge kann die erfindungsgemäße Fahrzeugscheibe auf vorteilhafte Weise für Fahrzeuge einsetzbar sein. In Verbindung mit optischen Sensoren ist eine verbesserte Messgenauigkeit anhand der erfindungsgemäßen Fahrzeugscheibe erzielbar.

In einem weiteren, nebengeordneten Aspekt ist ein Verfahren zur Herstellung einer erfindungsgemäßen Fahrzeugscheibe oder eines erfindungsgemäßen Fahrzeugs mit einer Fahrzeugscheibe vorgesehen, wobei wenigstens eine der zweiten Zonen des ersten und/oder zweiten Druckbereiches als ein Übergangsbereich zwischen der ersten Zone und der dritten Zone derart ausgebildet werden, sodass wenigstens ein optischer Effekt des ersten Druckbereiches durch einen optischen Effekt des zweiten Druckbereiches kompensiert wird.

Im Zuge des Herstellungsverfahrens einer erfindungsgemäßen Fahrzeugscheibe ist das Biegeverhalten von der Wärmeaufnahme der Fahrzeugscheibe abhängig. Die Wärmeaufnahme ist anhand der Bedruckung bzw. Schwarzbedruckung lokaler Bereiche der Scheibenelemente einer Fahrzeugscheibe einstellbar bzw. konfigurierbar. Insbesondere kann hierzu die Dichte bzw. Intensität der Bedruckung mit Einzelelementen, die Formgebung der Einzelelemente, die Ausgestaltung als eine vollständig bedruckte Fläche oder dergleichen variiert werden, sodass ein spezifisch, individuell ausgestalteter Flächenabschnitt vorliegt.

So kann mittels einer konkreten, individuellen Ausgestaltung eines bedruckten Bereiches das Biegeverhalten einer Fahrzeugscheibe, insbesondere in einzelnen lokalen Bereichen, beeinflusst werden. Somit sind auch optische Effekte bzw. Eigenschaften der resultierenden Fahrzeugscheibe wie z.B. Verzerrungen, insbesondere die Brechkraft der Fahrzeugscheibe, anhand der Ausgestaltung des ersten und zweiten Druckbereiches im Wesentlichen konfigurierbar.

Des Weiteren ist im Sinne des erfindungsgemäßen Verfahrens vorgesehen, dass sämtliche, vorstehend erläuterten Ausführungsformen einer erfindungsgemäßen Fahrzeugscheibe bzw. eines erfindungsgemäßen Fahrzeugs im Rahmen des erfindungsgemäßen Herstellungsverfahrens zweckmäßig umgesetzt bzw. bereitgestellt werden können.

Somit ist eine vollständig bzw. nahezu vollständig verzerrungsfreie Fahrzeugscheibe anhand des erfindungsgemäßen Verfahrens bereitstellbar.

Die Erfindung wird im Folgenden anhand der beigefügten Figuren erläutert.

Hierbei zeigen schematisch:
- Fig. 1: eine Übersichtsdarstellung einer Fahrzeugscheibe mit einem ersten und einem zweiten Scheibenelement;
- Fig. 2: ein Überblick über die Zoneneinteilung des ersten Druckbereiches entlang der zweiten Scheibenfläche des ersten Scheibenelements;
- Fig. 3: ein Überblick über den Sichtbereich des optischen Sensors entlang des ersten und zweiten Druckbereiches;
- Fig. 3a-3d: verschiedene Ausführungsbeispiele zur Ausgestaltung des ersten Druckbereiches entlang des ersten Scheibenelements;
- Fig. 4a-4e: verschiedene Ausführungsbeispiele zur Ausgestaltung des zweiten Druckbereiches entlang des zweiten Scheibenelements.

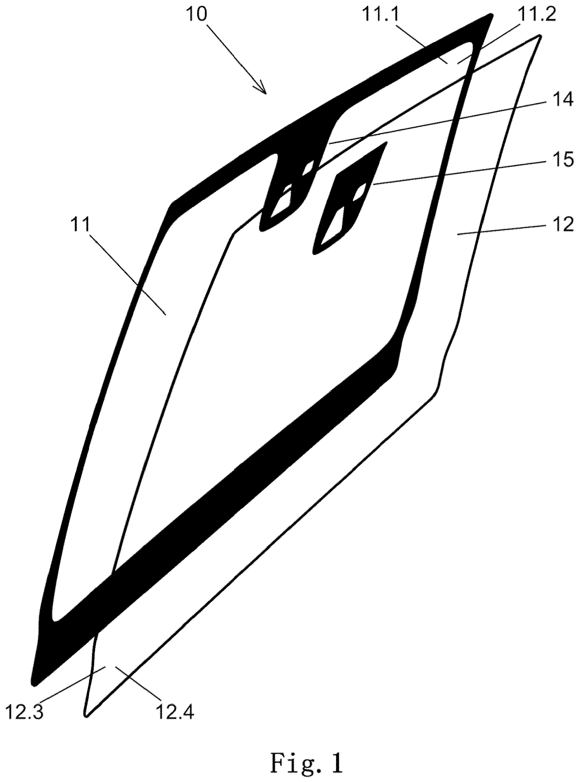

Die Fig. 1 zeigt eine Übersichtsdarstellung einer Fahrzeugscheibe 10 mit einem ersten und einem zweiten Scheibenelement 11; 12.

Das erste und zweite Scheibenelement 11; 12 sind vorzugsweise flächig aufeinander angeordnet. Insbesondere können die Scheibenelemente gemäß üblichen Herstellungsverfahren für Fahrzeugscheiben laminiert sein. So ist zwischen dem ersten und zweiten Scheibenelement 11; 12 vorzugsweise eine Laminierschicht vorgesehen, die in Fig. 1 nicht dargestellt ist.

Das erste Scheibenelement 11 weist eine erste und eine zweite Scheibenfläche 11.1; 11.2 auf. Die erste Scheibenfläche 11.1 ist vorzugsweise eine nach außen gerichtete Scheibenfläche, während die zweite Scheibenfläche des ersten Scheibenelements 11 vorzugsweise der Laminierschicht entgegengerichtet ist. In diesem Sinne stellt das erste Scheibenelement 11 den äußeren Teil der Fahrzeugscheibe 10 dar.

Das zweite Scheibenelement 12 stellt eine dritte und eine vierte Scheibenfläche 12.3; 12.4 bereit. Die dritte Scheibenfläche 12.3 ist vorzugsweise der in Fig. 1 nicht dargestellten Laminierschicht entgegengerichtet. So sind die zweite Scheibenflächen 11.2 des ersten Scheibenelements 11 und die dritte Scheibenfläche 12.3 des zweiten Scheibenelements 12 aneinander angeordnet.

Die vierte Scheibenfläche 12.4 des zweiten Scheibenelements 12 ist vorzugsweise eine nach innen, also in den Innenraum eines Fahrzeugs, gerichtete Scheibenfläche.

Entlang der zweiten Scheibenfläche 11.2 ist ein erster Druckbereich 14 vorgesehen, wobei entlang der vierten Scheibenfläche 12.4 ein zweiter Druckbereich 15 angeordnet ist. Die Druckbereiche 14; 15 beziehen sich insbesondere auf diejenigen Flächenabschnitte der Scheibenelemente 11; 12 bzw. Scheibenflächen 11.2; 12.4, in denen wenigstens ein Sensor, insbesondere ein optischer Sensor, angeordnet ist.

Alternativ kann sich ein Druckbereich, wie in Fig. 1 für den ersten Druckbereich 14 gezeigt, auf einen Flächenabschnitt der Scheibenelemente 11; 12 beziehen, der z.B. für einen Fahrzeugführer relevant ist.

Im Sinne der exemplarischen Erläuterung der vorliegenden Erfindung mit Blick auf den Einsatz eines Sensors bzw. einer Sensoranordnung, bezieht sich der erste Druckbereich 14 nach Fig. 1 vornehmlich auf einen entlang der oberen Seitenkante der zweiten Scheibenfläche 11.2 mittig ausgestalteten Bereich. Ein zweiter Druckbereich 15 bezieht sich insbesondere auf einen entlang der oberen Seitenkante der vierten Scheibenfläche 12.4 mittig angeordnet Flächenbereich.

Unter Berücksichtigung der Anwendung der vorliegenden Erfindung mit Blick auf einen Fahrzeugführer, kann sich der erste Druckbereich 14 nach Fig. 1 alternativ auf die gesamte zweite Scheibenfläche 11.2 beziehen, wobei sich der zweite Druckbereich 15 auf eine gesamte vierte Scheibenfläche 12.4 bezieht.

Gemäß Fig. 1 weisen der erste und zweite Druckbereiche 14; 15 sowohl transparente als auch per Schwarzdruck beschichtete bzw. bedruckte, intransparente Bereiche bzw. Zonen auf. Demzufolge ist vorgesehen, dass der wenigstens eine optische Sensor im Wesentlichen entlang eines transparenten Teils der Druckbereiche 14; 15 positioniert ist bzw. durch transparente Abschnitte der Druckbereiche 14; 15 eine optische Messung ausführt.

Der erste und zweite Druckbereich 14; 15 sind nach Fig. 1 mit jeweils zwei transparenten Bereichen zur Ankopplung von Sensoren ausgestaltet. Die transparenten Bereiche sind zylinderförmig bzw. quadratisch entlang der Druckbereiche 14; 15 ausgebildet.

Insbesondere sind die transparenten Bereiche bzw. Zonen entlang des ersten und zweiten Druckbereiches 14; 15 im Wesentlichen jeweils formgleich ausgestaltet.

Die transparenten Bereiche entlang des ersten Druckbereiches 14 können größere Abmessungen aufweisen als die transparenten Bereiche entlang des zweiten Druckbereiches 15. So ist anhand des nach außen gerichteten ersten Druckbereiches 14 ein adäquater, transparenter Bereich für einen fächerförmig bzw. konisch verlaufenden Strahlengang beispielsweise einer Sensoranordnung bereitstellbar, ebenso wie z.B. ein geeigneter Schutz vor Sonneneinstrahlung.

Des Weiteren ist vorstellbar, dass die nach Fig. 1 gezeigten transparenten Bereiche als halbtransparente Flächenbereiche oder dergleichen ausgestaltet sind. Insbesondere kann dies bei Anwendung von Infrarot-Sensoren oder anderweitigen Sensoren, die mit elektromagnetischer Strahlung im nicht sichtbarem Wellenlängenbereich arbeiten, gegeben sein.

Die in Fig. 1 dargestellten transparenten Abschnitte des ersten und zweiten Druckbereiches 14; 15 veranschaulichen in diesem Sinne insbesondere die Ankopplungsbereiche zweier Sensoren entlang der vierten Scheibenfläche 12.4 bzw. entlang des zweiten Scheibenelements 12.

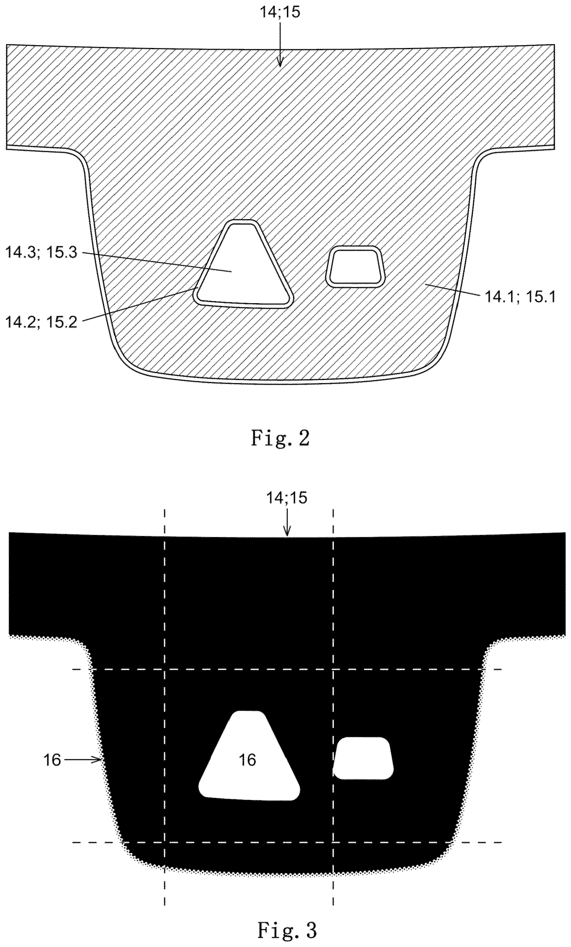

In Fig. 2 ist ein Überblick über eine Zoneneinteilung des ersten Druckbereiches 14 entlang der zweiten Scheibenfläche 11.2 des ersten Scheibenelements 11 veranschaulicht.

Nach Fig. 2 weisen die Druckbereiche 14; 15 jeweils eine erste Zone 14.1; 15.1, zwei zweite Zonen 14.2; 15.2 und zwei dritte Zone 14.3; 15.3 auf. Derartige Zonen weisen jeweils voneinander abweichende optische Eigenschaften auf.

Die dritte Zone 14.3; 15.3 beschreibt die Flächenabschnitte, entlang der wenigstens eine optische Sensor bzw. die Sensoranordnung an der vierten Scheibenfläche 12.4 angekoppelt ist.

Die erste Zone 14.1; 15.1 beschreibt die die Sensoranordnung umgebenden Flächenbereiche, die nach Fig. 1 als Schwarzdruck ausgestaltet sind.

Ein solcher Schwarzdruck der ersten Zone 14.1 des ersten Druckbereiches 14 kann dabei als Sichtblende sowie als Schutz vor externer elektromagnetischer Strahlung dienen. So kann beispielsweise Alterungseffekten aufgrund von Sonneneinstrahlung und dergleichen vorgebeugt werden.

Gemäß Fig. 2 sind ferner zwei zweite Zone 14.2; 15.2 entlang des ersten bzw. zweiten Druckbereiches 14; 15 ausgebildet. Demnach umgibt bzw. umrahmt die zweite Zone 14.2; 15.2 die dritte Zone 14.3; 15.3 jeweils vollständig.

In diesem Sinne stellt die zweite Zone 14.2; 15.2 einen Übergangsbereich zwischen der ersten Zone 14.1; 15.1 und der zugehörigen dritten Zone 14.3; 15.3 des jeweiligen Druckbereiches 14; 15 dar.

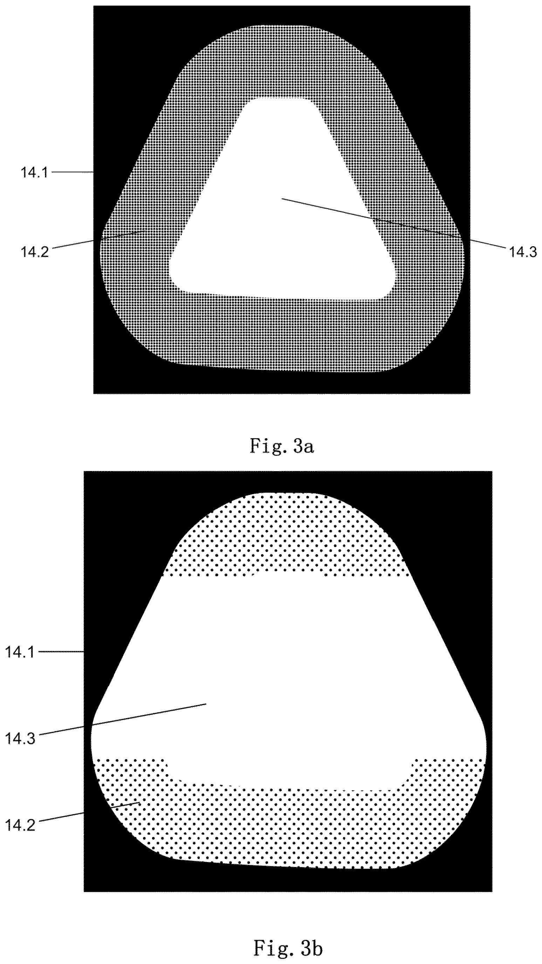

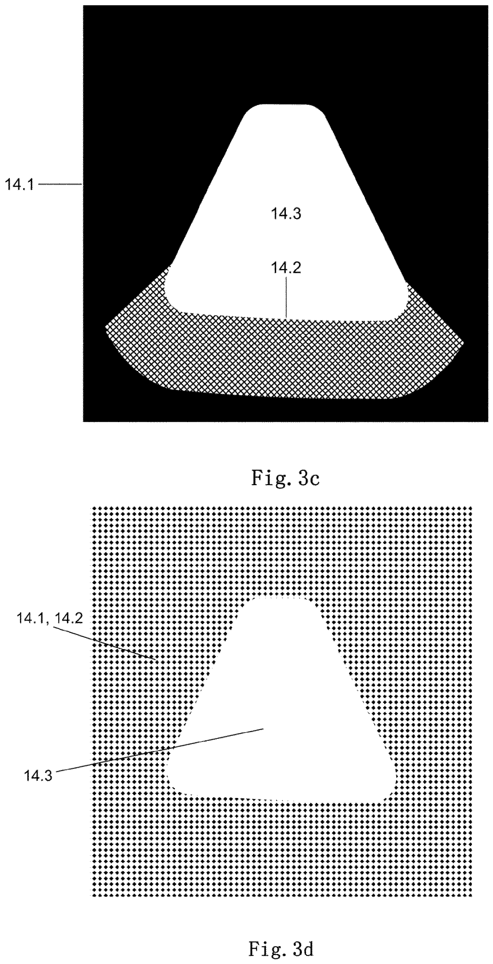

In Fig. 3 ist ein Überblick über den Sichtbereich 16 des optischen Sensors entlang des ersten Druckbereiches 14 gezeigt, insbesondere mit einem üblicherweise eingesetzten Siebdruck.

Im Sinne der vorliegenden Erfindung kann der Sichtbereich 16 eines Sensors den Flächenbereich einer Fahrzeugscheibe beschreiben, der einen Einfluss auf die vorzugsweise optische Messung ausüben kann. Alternativ kann der Sichtbereich 16 denjenigen Flächenbereich einer Fahrzeugscheibe 10 beschreiben, der die optischen Bedingungen für beispielsweise einen Fahrzeugführer beeinflussen kann.

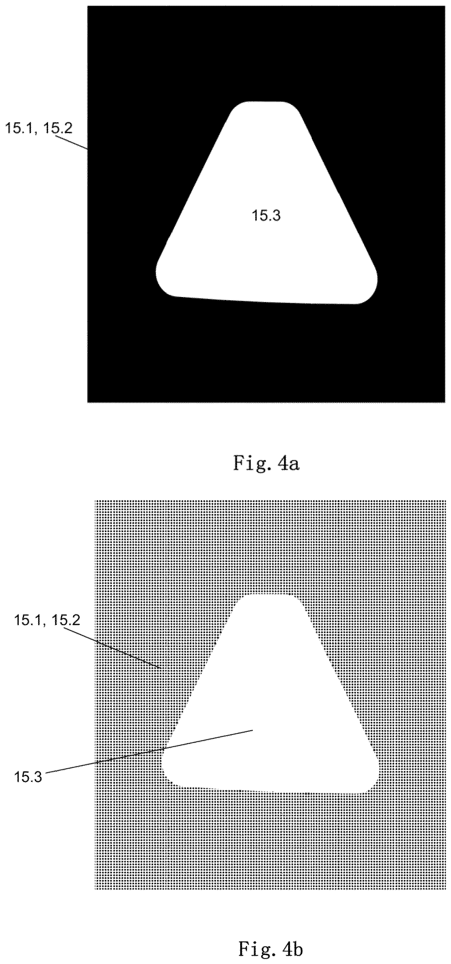

In Fig. 3 ist ein Sichtbereich 16 eines Sensors in Form der Druckbereiche 14; 15 gezeigt. Ein per gestrichelten Linien in quadratischer Form eingezeichneter Bereich wird nachfolgend in den Fig. 3a bis 3d und 4a bis 4e bezüglich der Ausgestaltung der Druckbereiche 14; 15 exemplarisch herangezogen.

Eine Adaption bzw. vorzugsweise individuelle Anpassung der optischen Eigenschaften der Fahrzeugscheibe 10 ist insbesondere entlang des Sichtbereiches 16 relevant. So ist vorgesehen, dass die Druckbereiche 14; 15 jeweils wenigstens teilweise oder vollständig mit einem individuell auszugestaltenden Schwarzdruck bedruckt sind.

Abweichend von der Fig. 3 kann der Sichtbereich 16 auch mit einer anderen geometrischen Form, z.B. kreisförmig oder hexagonal, definiert werden. Die Ausbildung des relevanten Sichtbereiches kann von der Formgebung der Fahrzeugscheibe, der Art des angekoppelten Sensors, den Umgebungsbedingungen, die auf die Fahrzeugscheibe einwirken, oder dergleichen abhängen.

Des Weiteren sind die optischen Eigenschaften des Sichtbereiches 16 durch die Kombination der zweckmäßigen, spezifischen Ausgestaltungen des ersten und zweiten Druckbereiches 14; 15 vorgegeben.

In den Figuren 3a bis 3d sind verschiedene Ausführungsbeispiele zur Ausgestaltung des ersten Druckbereiches 14 entlang des ersten Scheibenelements 11 gezeigt.

Nach Fig. 3a ist die erste Zone 14.1 des ersten Scheibenelements 11 per Schwarzdruck kontinuierlich bedruckt ausgestaltet, wobei die dritte Zone 14.3 transparent, also nicht bedruckt, ist.

Die zweite Zone 14.2 umgibt die dritte Zone 14.3 nach Fig. 3a vollständig, sodass die zweite Zone 14.2 einen Rahmen ausbildet. So stellt die zweite Zone 14.2 einen Übergangsbereich zwischen der ersten und der dritten Zone 14.1; 14.3 dar.

Die zweite Zone ist nach Fig. 3a mit einem Muster aus Einzelelementen bedruckt. Vorzugsweise sind die Einzelelemente als Schwarzdruck ausgebildet. Die Einzelelemente weisen eine quadratische Form auf. Das Muster ist nach Fig. 3a als ein gleichmäßiges, kontinuierlich fortgebildetes Muster der quadratischen Einzelelemente ausgebildet.

Nach Fig. 3b ist die zweite Zone 14.2 lediglich teilweise mit einem Muster aus Einzelelementen bedruckt. Der übrige Teil der zweiten Zone 14.2 ist identisch mit der ersten Zone 14.1 ausgestaltet.

So kann das Ausführungsbeispiel nach Fig. 3b derart aufgefasst werden, dass die zweite Zone 14.2 teilweise einzelstehend ausgebildet ist und lediglich abschnittsweise in die erste Zone 14.1 integriert ist.

Die zweite Zone 14.2 ist an einem spitzen Seitenende und einem flachen Seitenende der zylinderstumpfförmigen dritten Zone 14.3 als ein Muster aus Einzelelementen ausgestaltet.

Die dritte Zone 14.3 kann abweichend von einer zylinderstumpfförmigen Geometrie auch eine anderweitige Ausgestaltungsform aufweisen. Die zylinderstumpfförmige Geometrie der dritten Zonen 14.3; 15.3 ist im Sinne der Figuren 3a bis 3d sowie der Figuren 4a bis 4e lediglich als exemplarische Ausgestaltung zu verstehen.

Die Einzelelemente des Musters der zweiten Zone 14.2 weisen nach Fig. 3b eine kreisförmige Geometrie auf.

Zusammenfassend kann die zweite Zone 14.2 des ersten Druckbereiches 14 in ihrer Bedruckung sowie der geometrischen Ausdehnung bedarfsweise und zweckmäßig ausgestaltet sein.

In diesem Sinne kann die zweite Zone 14.2 lediglich lokal einzelstehend ausgebildet sein, um Übergangsbereich zwischen der ersten Zone und der dritten Zone 14.3 bereitzustellen. Selbiges kann bedarfsweise für die Zonen 15.1; 15.2; 15.3 des zweiten Druckbereiches 15 gelten.

In Fig. 3c ist die zweite Zone 14.2 entlang einem flachen Seitenende der zylinderstumpfförmigen dritten Zone 14.3 bereitgestellt. Insbesondere ist die zweite Zone 14.2 abschnittsweise als ein Muster von Einzelelementen in Form nicht bedruckter Bereiche ausgestaltet und teilweise in die erste Zone 14.1 integriert.

In Fig. 3d ist eine erste Zone 14.1 als ein Muster aus gedruckten Einzelelementen bereitgestellt, wobei die zweite Zone 14.2 als in die erste Zone 14.1 integriert aufgefasst werden kann. In diesem Sinne ist die zweite Zone 14.2 vollständig in die erste Zone 14.1 integriert vorgesehen.

Die erste und zweite Zone 14.1; 14.2 umgeben die zylinderstumpfförmige dritte Zone 14.3 vollständig.

In den Figuren 4a bis 4e sind verschiedene Ausführungsbeispiele zur Ausgestaltung des zweiten Druckbereiches 15 entlang des zweiten Scheibenelements 12 dargestellt.

Hinsichtlich der Ausgestaltungen der ersten, zweiten und dritten Zone 15.1; 15.2; 15.3 des zweiten Druckbereiches 15 sind dieselben Optionen anwendbar, wie bereits vorstehend für den ersten Druckbereich 14 erläutert.

Nach Fig. 4a ist die erste Zone 15.1 als kontinuierlicher Schwarzdruck ausgestaltet, wobei die dritte Zone 15.3 nicht bedruckt und somit transparent vorgesehen ist.

Die zweite Zone 15.2 kann als in die erste Zone 15.1 integriert aufgefasst werden.

Allgemein können die zweiten Zonen 14.2; 15.2 im Sinne der vorliegenden Erfindung jeweils bedarfsweise identisch mit den ersten Zonen 14.1; 15.1 ausgestaltet bzw. in diese integriert sein. In einem solchen Fall bildet sich ein Übergangsbereich als zweite Zone 14.2; 15.2 zwischen der ersten und dritten Zone 14.1; 14.3; 15.1; 15.3 im Sinne der vorliegenden Erfindung insbesondere unmittelbar entlang der Grenze zur transparenten, dritten Zone 14.3; 15.3 aus.

Es ist eine individuelle und zweckmäßige Ausgestaltung des ersten und zweiten Druckbereiches 14; 15 mit ersten, zweiten und dritten Zonen 14.1; 14.2; 14.3; 15.1; 15.2; 15.3 vorgesehen, um eine geeignete Kombination von Scheibenelementen 11; 12 zur Kompensation optischer Effekte, insbesondere in einem Sichtbereich 16 eines optischen Sensors, bereitzustellen.

Nach Fig. 4b ist die erste Zone mit einem Muster aus Einzelelementen bedruckt, wobei die Einzelelemente eine kreisrunde Form aufweisen.

Die zweite Zone 15.2 ist in der ersten Zone 15.1 integriert dargestellt.

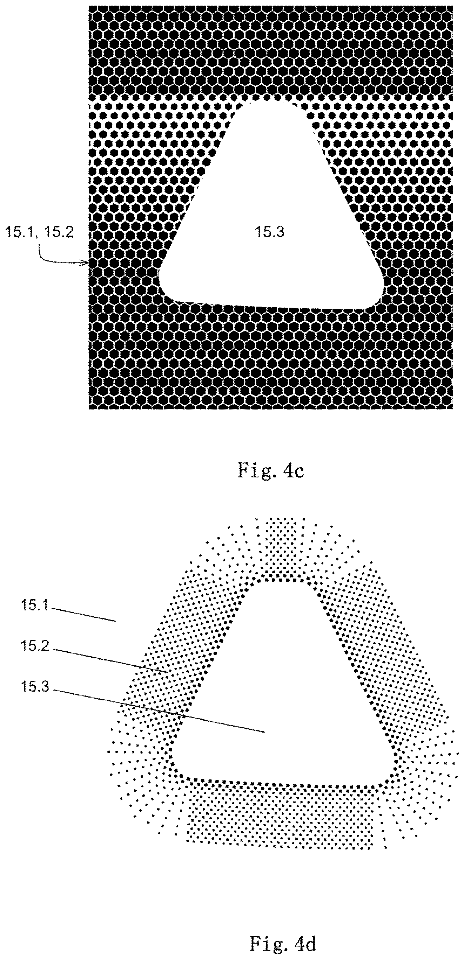

In Fig. 4c ist die zweite Zone 15.2 ebenfalls als in die erste Zone 15.1 integriert vorgesehen.

Die erste Zone 15.1 ist als ein Muster aus Einzelelementen ausgestaltet, wobei die Einzelelemente eine hexagonale Form aufweisen.

Nach Fig. 4c ist die erste Zone 15.1 mit einem Gradientenmuster vorgesehen.

Das Gradientenmuster ist in Form von variierenden Größen der hexagonalen Einzelelemente ausgebildet. Insbesondere variiert die Größe der hexagonalen Einzelelemente entlang des Verlaufs von dem flachen zylinderstumpfförmigen Ende der dritten Zone 15.3 in Richtung des spitz zulaufenden Endes der zylinderstumpfförmigen dritten Zone 15.3.

Anstatt eines einfachen, gleichmäßig ausgestalteten Musters aus Einzelelementen kann im Sinne der vorliegenden Erfindung stets ein Gradientenmuster vorgesehen sein, wobei sich die Größe der Einzelelemente, die Form des Musters, Abstände der Einzelelemente zueinander oder vergleichbare Merkmale der Bedruckung ändern können.

In Fig. 4d ist die erste Zone 15.1 des zweiten Druckbereiches 15 identisch mit der dritten 15.3 als nicht bedruckt bzw. transparent ausgebildet.

Die zweite Zone 15.2 umrahmt die dritte Zone 15.3 vollständig. Die zweite Zone 15.2 ist mit einem umlaufenden Gradientenmuster aus quadratischen Einzelelementen ausgebildet.

Das Gradientenmuster ist insbesondere derart ausgebildet, dass entlang der abgerundeten Kanten der dritten Zone 15.3 eine Aufspreizung von Reihen an Einzelelementen erfolgt. So liegt entlang der abgerundeten Ecken der dritten Zone 15.3 eine geringere Dichte an Einzelelementen innerhalb der zweiten Zone 15.2 vor.

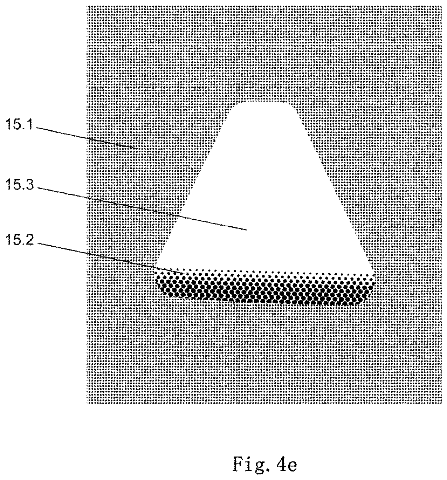

Nach Fig. 4e ist die erste Zone 15.1 mit einem gleichmäßigen Muster aus kreisrunden Einzelelementen bedruckt bzw. ausgestaltet.

Die zweite Zone 15.2 ist entlang des flachen Seitenendes der zylinderstumpfförmigen dritten Zone 15.3 als ein Gradientenmuster aus Einzelelementen bereitgestellt.

Die Einzelelemente weisen im Wesentlichen eine kreisförmige Geometrie auf, wobei sich die Einzelelemente stellenweise überlagern. Es wird ein teilweise schlangenlinienförmiges Muster erzielt.

Abgesehen von dem stumpfen bzw. flachen Seitenende der dritten Zone 15.3 ist die zweite Zone 15.2 als in die erste Zone 15.1 integriert bzw. als identisch mit dieser ausgestaltet. So hebt sich die zweite Zone 15.2 nach Fig. 4e lediglich an dem stumpfen bzw. flachen Seitenende einzelstehend von der dritten Zone 15.3 ab.

Die dritten Zonen 14.3; 15.3 sind stets als transparenter Abschnitt des ersten bzw. zweiten Druckbereiches 14; 15 abgegrenzt bzw. ausgebildet, sodass ein Fahrzeugführer, ein optischer Sensor oder dergleichen durch den transparenten dritten Bereich 15.3 hindurchsehen kann.

Im Allgemeinen kann durch Anordnung des ersten und zweiten Scheibenelementes 11; 12 eine Kombination spezifisch ausgebildeter erster und zweiter Druckbereiche 14; 15 bereitgestellt werden, um optische Effekte bzw. Eigenschaften einzelner Scheibenelemente 11; 12 zu kompensieren.

Insbesondere die jeweils zweite Zone 14.2; 15.2 kann als ein Übergangsbereich zwischen den ersten und dritten Zonen 14.1; 14.3; 15.1; 15.3 bedarfsweise ausgestaltet sein.

So kann eine Fahrzeugscheibe 10 bereitgestellt werden, die vorteilhafte optische Eigenschaften für Verwendung mit wenigstens einem Sensor bzw. einer Sensoranordnung aufweist.

### Bezugszeichenliste

- 10: Fahrzeugscheibe
- 11: erstes Scheibenelement
- 11.1: erste Scheibenfläche
- 11.2: zweite Scheibenfläche
- 12: zweites Scheibenelement
- 12.3: dritte Scheibenfläche
- 12.4: vierte Scheibenfläche
- 14: erster Druckbereich
- 14.1: erste Zone (des ersten Druckbereiches)
- 14.2: zweite Zone (des ersten Druckbereiches)
- 14.3: dritte Zone (des ersten Druckbereiches)
- 15: zweiter Druckbereich
- 15.1: erste Zone (des zweiten Druckbereiches)
- 15.2: zweite Zone (des zweiten Druckbereiches)
- 15.3: dritte Zone (des zweiten Druckbereiches)
- 16: Sichtbereich

## Patentansprüche

1. Fahrzeugscheibe (10), insbesondere für ein Kraftfahrzeug, einen Bus, ein Zug oder ein Schiff, mit wenigstens einem ersten Scheibenelement (11) und einem zweiten Scheibenelement (12), die flächig miteinander verbunden sind, sodass die Fahrzeugscheibe (10) eine erste Scheibenfläche (11.1), eine zweite Scheibenfläche (11.2), eine dritte Scheibenfläche (12.3) und eine vierte Scheibenfläche (12.4) aufweist, wobei die zweite Scheibenfläche (11.2) einen ersten Druckbereich (14) und die dritte oder vierte Scheibenfläche (12.3; 12.4) einen zweiten Druckbereich (15) aufweist, zur Ausgestaltung eines Sichtbereiches (16) entlang der Fahrzeugscheibe (10), wobei der erste und zweite Druckbereich (14; 15) jeweils mit wenigstens einer ersten, zweiten und dritten Zone (14.1; 14.2; 14.3; 15.1; 15.2; 15.3) ausgestaltet sind, wobei wenigstens eine der ersten und/oder zweiten Zonen (14.1; 14.2; 15.1; 15.2) wenigstens teilweise bedruckt ist und die dritten Zonen (14.3; 15.3) jeweils nicht bedruckt sind, wobei die zweiten Zonen (14.2; 15.2) jeweils als ein Übergangsbereich zwischen der ersten Zone (14.1; 15.1) und der dritten Zone (14.3; 15.3) ausgebildet sind, sodass wenigstens ein optischer Effekt des ersten Druckbereiches (14) durch einen optischen Effekt des zweiten Druckbereiches (15) kompensierbar ist.

2. Fahrzeugscheibe (10) nach Anspruch 1,
**dadurch gekennzeichnet, dass**
eine Brechkraft als optische Eigenschaft des ersten Scheibenelements (11) im ersten Druckbereich (14) durch eine Brechkraft als optische Eigenschaft des zweiten Scheibenelements (12) im zweiten Druckbereich (15) kompensierbar ist.

3. Fahrzeugscheibe (10) nach Anspruch 1 oder 2,
**dadurch gekennzeichnet, dass**
die erste Zone (14.1) des ersten Druckbereiches (14) kontinuierlich oder mit einem Muster aus Einzelelementen bedruckt ist.

4. Fahrzeugscheibe (10) nach einem der vorhergehenden Ansprüche,
**dadurch gekennzeichnet, dass**
die zweite Zone (14.2) des ersten Druckbereiches (14) wenigstens teilweise als ein Muster aus gedruckten Einzelelementen ausgestaltet ist.

5. Fahrzeugscheibe (10) nach einem der vorhergehenden Ansprüche,
**dadurch gekennzeichnet, dass**
die erste Zone (15.1) des zweiten Druckbereiches (15) kontinuierlich, mit einem Muster aus Einzelelementen oder nicht bedruckt ist.

6. Fahrzeugscheibe (10) nach einem der vorhergehenden Ansprüche,
**dadurch gekennzeichnet, dass**
die zweite Zone (15.2) des zweiten Druckbereiches (14) wenigstens teilweise als ein Muster aus Einzelelementen ausgestaltet ist.

7. Fahrzeugscheibe (10) nach einem der vorhergehenden Ansprüche,
**dadurch gekennzeichnet, dass**
die erste Zone (14.1; 15.1) und/oder die zweite Zone (14.2; 15.2) des ersten Druckbereiches (14) und/oder des zweiten Druckbereiches (15) wenigstens teilweise identisch mit der jeweils zugehörigen dritten Zone (14.3; 15.3) ausgestaltet sind.

8. Fahrzeugscheibe (10) nach einem der vorhergehenden Ansprüche,
**dadurch gekennzeichnet, dass**
das Muster aus Einzelelementen der ersten Zone (15.1) und/oder der zweiten Zone (15.2) des zweiten Druckbereiches (15) ein Gradientenmuster ist.

9. Fahrzeugscheibe (10) nach einem der vorhergehenden Ansprüche,
**dadurch gekennzeichnet, dass**
die ersten und zweiten Zonen (14.1; 14.2; 15.1; 15.2) des ersten und zweiten Druckbereiches (14; 15) in Form eines Schwarzdrucks ausgebildet sind.

10. Fahrzeugscheibe (10) nach einem der vorhergehenden Ansprüche,
**dadurch gekennzeichnet, dass**
der erste Druckbereich (14) und der zweite Druckbereich (15) jeweils als ein Siebdruck ausgestaltbar sind.

11. Fahrzeugscheibe (10) nach einem der vorhergehenden Ansprüche,
**dadurch gekennzeichnet, dass**
die Einzelelemente, für ein gedrucktes Muster aus Einzelelementen, die geometrische Form eines Kreises, eines Rechtecks, eines Quadrats, einer Raute, eines Hexagons, eines Oktaeders oder dergleichen aufweisen.

12. Fahrzeug, insbesondere Kraftfahrzeug, vorzugsweise Personen- oder Lastkraftwagen, Bus, Zug oder Schiff, mit einer Fahrzeugscheibe (10) nach einem der vorherigen Ansprüche.

13. Verfahren zur Herstellung einer Fahrzeugscheibe (10) oder eines Fahrzeugs mit einer Fahrzeugscheibe (10) nach einem der vorhergehenden Ansprüche, wobei wenigstens eine der zweiten Zonen (14.2; 15.2) des ersten und/oder zweiten Druckbereiches (14; 15) als ein Übergangsbereich zwischen der ersten Zone (14.1; 15.1) und der dritten Zone (14.3; 15.3) derart ausgebildet wird, sodass wenigstens ein optischer Effekt des ersten Druckbereiches (14) durch einen optischen Effekt des zweiten Druckbereiches (15) kompensiert wird.

## Claims

1. Vehicle pane (10), in particular for a motor vehicle, a bus, a train, or a ship, having at least a first pane element (11) and a second pane element (12) that are joined to one another surface-to-surface such that the vehicle pane (10) has a first pane face (11.1), a second pane face (11.2), a third pane face (12.3), and a fourth pane face (12.4), wherein the second pane face (11.2) has a first printed region (14) and the third or fourth pane face (12.3; 12.4) has a second printed region (15) for forming a viewing region (16) along the vehicle pane (10), wherein the first and second printed region (14; 15) are each designed with at least a first, second, and third zone (14.1; 14.2; 14.3; 15.1; 15.2; 15.3), wherein at least one of the first and/or second zones (14.1; 14.2; 15.1; 15.2) is at least partially printed and the third zones (14.3; 15.3) are, in all cases, not printed, wherein the second zones (14.2; 15.2) are in each case implemented as a transition region between the first zone (14.1; 15.1) and the third zone (14.3; 15.3) such that at least one optical effect of the first printed region (14) can be compensated by an optical effect of the second printed region (15).

2. Vehicle pane (10) according to claim 1,
**characterized in that** a refractive power as an optical property of the first pane element (11) in the first printed region (14) can be compensated by a refractive power as an optical property of the second pane element (12) in the second printed region (15).

3. Vehicle pane (10) according to claim 1 or 2,
**characterized in that** the first zone (14.1) of the first printed region (14) is printed continuously or with a pattern of individual elements.

4. Vehicle pane (10) according to one of the preceding claims,
**characterized in that** the second zone (14.2) of the first printed region (14) is designed at least partially as a pattern of printed individual elements.

5. Vehicle pane (10) according to one of the preceding claims,
**characterized in that** the first zone (15.1) of the second printed region (15) is printed continuously or with a pattern of individual elements or is not printed.

6. Vehicle pane (10) according to one of the preceding claims,
**characterized in that** the second zone (15.2) of the second printed region (14) is designed at least partially as a pattern of individual elements.

7. Vehicle pane (10) according to one of the preceding claims,
**characterized in that** the first zone (14.1; 15.1) and/or the second zone (14.2; 15.2) of the first printed region (14) and/or of the second printed region (15) are designed at least partially identical to the respective associated third zone (14.3; 15.3).

8. Vehicle pane (10) according to one of the preceding claims,
**characterized in that** the pattern of individual elements of the first zone (15.1) and/or of the second zone (15.2) of the second printed region (15) is a gradient pattern.

9. Vehicle pane (10) according to one of the preceding claims,
**characterized in that** the first and second zones (14.1; 14.2; 15.1; 15.2) of the first and second printed region (14; 15) are implemented in the form of a black print.

10. Vehicle pane (10) according to one of the preceding claims,
**characterized in that** the first printed region (14) and the second printed region (15) can be designed in each case as a screen print.

11. Vehicle pane (10) according to one of the preceding claims,
**characterized in that** the individual elements for a printed pattern made up of individual elements have the geometric shape of a circle, a rectangle, a square, a rhombus, a hexagon, an octahedron, or the like.

12. Vehicle, in particular a motor vehicle, preferably a passenger car or a truck, bus, train, or ship, having a vehicle pane (10) according to one of the preceding claims.

13. Method for producing a vehicle pane (10) or a vehicle having a vehicle pane (10) according to one of the preceding claims, wherein at least one of the second zones (14.2; 15.2) of the first and/or second printed region (14; 15) is implemented as a transition region between the first zone (14.1; 15.1) and the third zone (14.3; 15.3) such that at least one optical effect of the first printed region (14) is compensated by an optical effect of the second printed region (15).

## Revendications

1. Vitre de véhicule (10), en particulier pour un véhicule automobile, un bus, un train ou un bateau, avec au moins un premier élément de vitre (11) et un deuxième élément de vitre (12), qui sont reliés l'un à l'autre en surface, de telle sorte que la vitre de véhicule (10) présente une première surface de vitre (11.1), une deuxième surface de vitre (11.2), une troisième surface de vitre (12.3) et une quatrième surface de vitre (12. 4), la deuxième face de vitre (11.2) présentant une première région imprimée (14) et la troisième ou quatrième face de vitre (12.3; 12.4) présentant une deuxième région imprimée (15) pour former une région de vision (16) le long de la vitre de véhicule (10), la première et la deuxième région imprimée (14; 15) étant chacune conçue avec au moins une première, une deuxième et une troisième zone (14.1 ; 14.2; 14.3; 15.1; 15.2; 15.3), au moins l'une des première et/ou deuxième zones (14.1 ; 14.2; 15.1; 15.2) étant au moins partiellement imprimée et les troisièmes zones (14.3; 15.3) n'étant dans tous les cas pas imprimées, les deuxièmes zones (14.2; 15.2) sont réalisées chacune en tant que zone de transition entre la première zone (14.1 ; 15.1) et la troisième zone (14.3; 15.3) de telle sorte qu'au moins un effet optique de la première zone imprimée (14) peut être compensé par un effet optique de la deuxième zone imprimée (15).

2. Vitre de véhicule (10) selon la revendication 1,
**caractérisé en ce qu'**une puissance de réfraction comme propriété optique du premier élément de vitre (11) dans la première zone imprimée (14) peut être compensée par une puissance de réfraction comme propriété optique du deuxième élément de vitre (12) dans la deuxième zone imprimée (15).

3. Vitre de véhicule (10) selon la revendication 1 ou 2,
**caractérisé en ce que** la première zone (14.1) de la première région imprimée (14) est imprimée en continu ou avec un motif d'éléments individuels.

4. Vitre de véhicule (10) selon l'une des revendications précédentes,
**caractérisé en ce que** la deuxième zone (14.2) de la première région imprimée (14) est conçue au moins partiellement comme un motif d'éléments individuels imprimés.

5. Vitre de véhicule (10) selon l'une des revendications précédentes,
**caractérisé en ce que** la première zone (15.1) de la deuxième région imprimée (15) est imprimée en continu ou avec un motif d'éléments individuels ou n'est pas imprimée.

6. Vitre de véhicule (10) selon l'une des revendications précédentes,
**caractérisé en ce que** la deuxième zone (15.2) de la deuxième région imprimée (14) est conçue au moins partiellement comme un motif d'éléments individuels.

7. Vitre de véhicule (10) selon l'une des revendications précédentes,
**caractérisé en ce que** la première zone (14.1 ; 15.1) et/ou la deuxième zone (14.2; 15.2) de la première région imprimée (14) et/ou de la deuxième région imprimée (15) sont conçues au moins partiellement de manière identique à la troisième zone (14.3; 15.3) respectivement associée.

8. Vitre de véhicule (10) selon l'une des revendications précédentes,
**caractérisé en ce que** le motif des éléments individuels de la première zone (15.1) et/ou de la deuxième zone (15.2) de la deuxième région imprimée (15) est un motif en dégradé.

9. Vitre de véhicule (10) selon l'une des revendications précédentes,
**caractérisé en ce que** la première et la deuxième zone (14.1; 14.2; 15.1; 15.2) de la première et de la deuxième région imprimée (14; 15) sont réalisées sous la forme d'une impression noire.

10. Vitre de véhicule (10) selon l'une des revendications précédentes,
**caractérisée en ce que** la première zone imprimée (14) et la deuxième zone imprimée (15) peuvent être réalisées chacune sous forme de sérigraphie.

11. Vitre de véhicule (10) selon l'une des revendications précédentes,
**caractérisée en ce que** les éléments individuels pour un motif imprimé composé d'éléments individuels ont la forme géométrique d'un cercle, d'un rectangle, d'un carré, d'un losange, d'un hexagone, d'un octaèdre, ou similaire.

12. Véhicule, notamment un véhicule automobile, de préférence une voiture particulière ou un camion, un bus, un train ou un bateau, comportant une vitre de véhicule (10) selon l'une des revendications précédentes.

13. Procédé de fabrication d'une vitre de véhicule (10) ou d'un véhicule comportant une vitre de véhicule (10) selon l'une des revendications précédentes, dans lequel au moins l'une des deuxièmes zones (14.2; 15.2) de la première et/ou de la deuxième région imprimée (14; 15) est réalisée en tant que région de transition entre la première zone (14.1 ; 15.1) et la troisième zone (14.3; 15.3) de telle sorte qu'au moins un effet optique de la première région imprimée (14) est compensé par un effet optique de la deuxième région imprimée (15).
